# EUROPEAN PATENT SPECIFICATION

(11) **EP 4 460 607 B1**
(45) Date of publication and mention of the grant of the patent: **14.01.2026**
(21) Application number: 22720062.3
(22) Date of filing: 14.04.2022
(51) Int. Cl.: E04H 4/06, E04F 10/06, E04F 13/04

(54) **MOTORIZED BARRIER DEVICES**
MOTORISIERTE BARRIEREVORRICHTUNGEN
DISPOSITIFS DE BARRIÈRE MOTORISÉS

(30) Priority: 06.01.2022 IL 28966522
(43) Date of publication of application: 13.11.2024
(73) Proprietor: Smart Fence Ltd, 9979700 Karme Yosef (IL)
(72) Inventor: SNAPIR, Nir, 9979700 Karme Yosef (IL)
(74) Representative: Sonnenberg Harrison Partnerschaft mbB
(86) International application number: PCT/IL2022/050394
(87) International publication number: WO 2023/131938

(56) References cited:
- WO-A1-2009/019171
- FR-A1- 2 842 234
- GB-A- 374 187

## Description

### FIELD OF THE INVENTION

The invention relates to motorized barrier devices.

### BACKGROUND OF THE INVENTION

Motorized barrier devices are designed for cyclic raising and lowering a barrier. Barriers can be in the form of bollards, booms, and the like. Motorized barrier devices can be deployed either as permanent fixtures or portable fixtures. Motorized barrier devices can be employed as manually operated standalone items. Alternatively, motorized barrier devices can be operated by a remote control, a smartphone app, and the like.

Examples and embodiments of prior art may be found in GB 374 187 A, WO 2009/019171 A1 and FR 2 842 234 A1.

### SUMMARY OF THE INVENTION

The present invention is for motorized barrier devices, access management systems for managing access to protected areas and installations for protecting protected areas. The motorized barrier devices include a housing, a horizontal rigid beam having a storage position and a barrier position raised with respect to the storage position, a pair of folding arms between the housing and the horizontal rigid beam, and a motorized gear arrangement for raising the horizontal rigid beam from its storage position to its barrier position and lowering the horizontal rigid beam from its barrier position to its storage position. The motorized gear arrangement includes a horizontal axle, a motor for rotating the horizontal axle in one direction and an opposite direction, and a pair of worm gears at the opposite axle ends for driving the pair of folding arms from a substantially horizontal folded position to a substantially upright extended position on rotation of the horizontal axle in one direction and from their substantially upright extended position to their substantially horizontal folded position on rotation of the horizontal axle in the opposite direction. The left worm gear and the right worm gear correspondingly rotate the left folding arm and the right folding arm through a near right angle between their folded position to their extended position. The motorized barrier devices form a rigid frame in their barrier positions and include a self-winding flexible barrier fitment initially stored in a housing and raised to form a barrier supported on their rigid frame in their barrier positions. A flexible barrier fitment enables raising a horizontal rigid beam until the flexible barrier fitment is stretched heightwise tautly, thereby determining the horizontal rigid beam's barrier position. The flexible barrier fitment self-winds on lowering the horizontal rigid beam from its barrier position to its storage position. The flexible barrier fitment preferably also includes a spring biased self-winding left cable and a spring biased self-winding right cable for ensuring it is also stretched widthwise tautly

The motorized barrier devices of the present invention can be provisioned with flexible barrier fitments of different lengths and/or different heights for different applications. The flexible barrier fitments have a maximum height limited by their length because each folding arm in its folded state is necessarily shorter than half a motorized barrier device's length. The motorized barrier devices are designed to have a suitable gear ratio depending on its intended application in terms of a flexible barrier fitment's weight, duration to raise and lower a flexible barrier, and the like.

Motorized barrier devices of the present invention can be deployed end-to-end to completely surround a protected area, for example, a building site, a swimming pool, and the like. Motorized barrier devices can be deployed in a trench such that they are flush fit with a border adjacent a protected area for convenience and/or aesthetic purposes. Motorized barrier devices can be engineered to meet national technical standards in terms of sturdiness, barrier height, and the like, for different applications. For example, motorized barrier devices of the present invention can be engineered to comply with swimming pool fence regulations.

Access management systems for managing access to protected areas can employ one or more motorized barrier devices of the present invention for preventing physical access for security reasons, safety reasons, and the like. Such access management systems can automatically control access to protected areas by employing commercially available data recognition capabilities including *inter alia* bar card readers, biometric recognition, vehicle registration recognition, and the like.

### BRIEF DESCRIPTION OF DRAWINGS

In order to understand the present invention and to see how it can be carried out in practice, preferred embodiments will now be described, by way of non-limiting examples only, with reference to the accompanying drawings, in which similar parts are likewise numbered, and in which:
Fig. 1 is a combined front perspective view and schematic diagram of a motorized barrier device with a flexible barrier fitment constituted by sheet material in a storage position;
Fig. 2A is a partial exploded front perspective view of the motorized barrier device in a storage position;
Fig. 2B is a partial exploded rear perspective view of the motorized barrier device in its storage position;
Fig. 3 is an exploded view of the motorized barrier device;
Fig. 4A is a partial exploded front perspective view of the motorized barrier device in a barrier position;
Fig. 4B is a partial exploded rear perspective view of the motorized barrier device in its barrier position;
Fig. 5A is a close-up view of a left worm gear of the motorized barrier device in its storage position;
Fig. 5B is a close-up view of a right worm gear of the motorized barrier device in its storage position;
Fig. 6A is a close-up view of the motorized barrier device's left worm gear in its barrier position;
Fig. 6B is a close-up view of the motorized barrier device's right worm gear in its barrier position;
Fig. 7A is a partial exploded front perspective view of a motorized barrier device with a flexible barrier fitment constituted by horizontal wires in a barrier position;
Fig. 7B is a partial exploded rear perspective view of the Figure 7A motorized barrier device in its barrier position;
Fig. 8A is a pictorial view of an access management system enabling access to a swimming pool;
Fig. 8B is a transverse cross section along line A-A in Figure 8A;
Fig. 9A is a pictorial view of the access management system disabling access to the swimming pool; and
Fig. 9B is a transverse cross section along line B-B in Figure 9A.

### DETAILED DESCRIPTION OF DRAWINGS

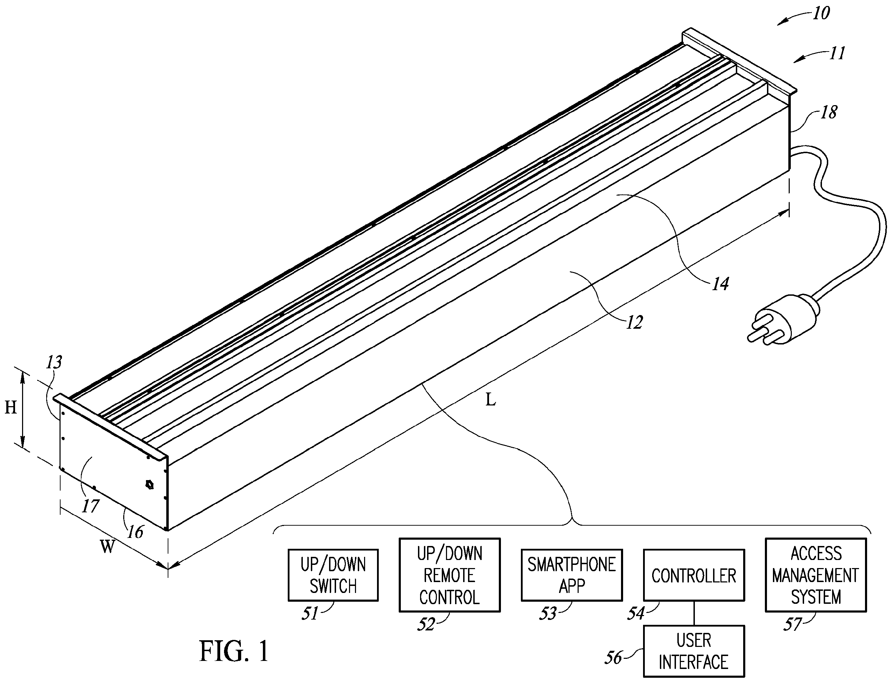

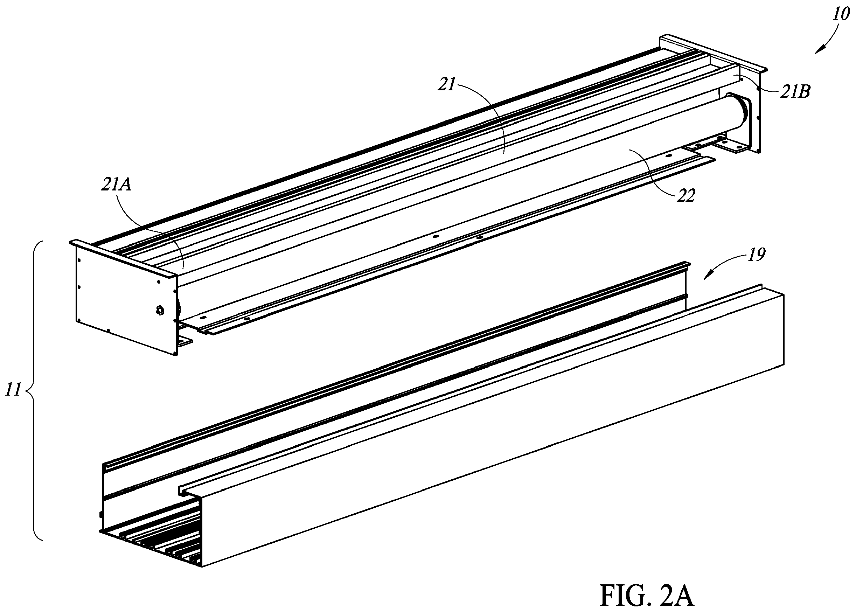

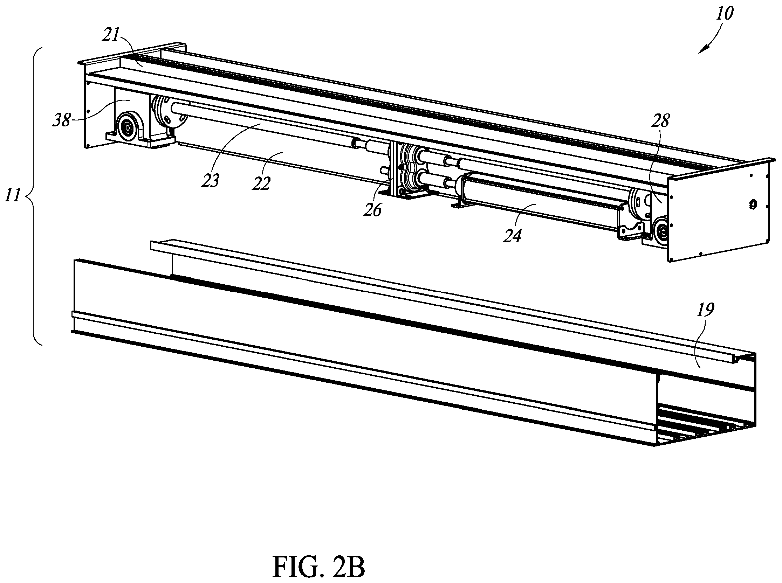

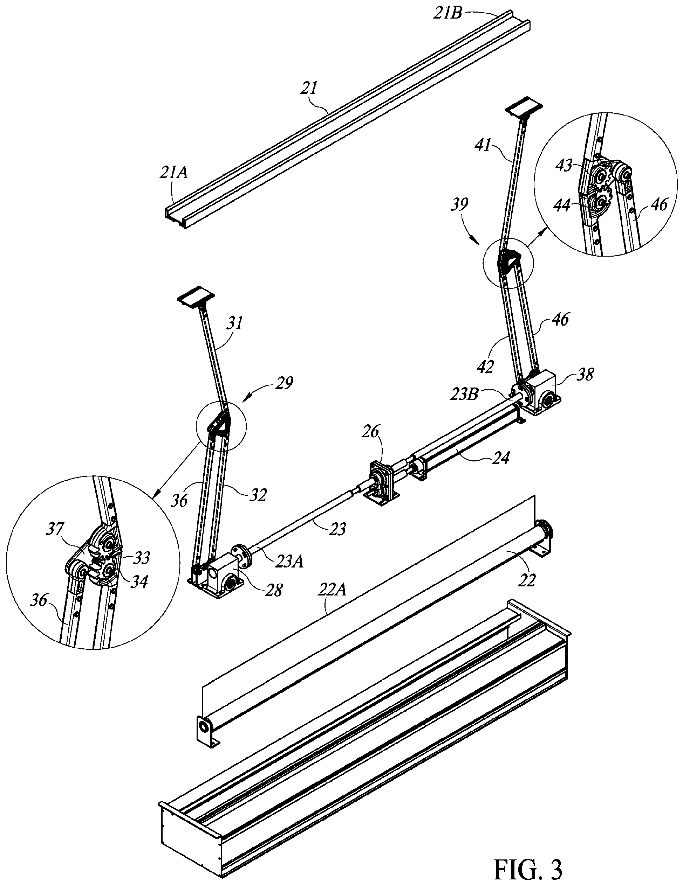

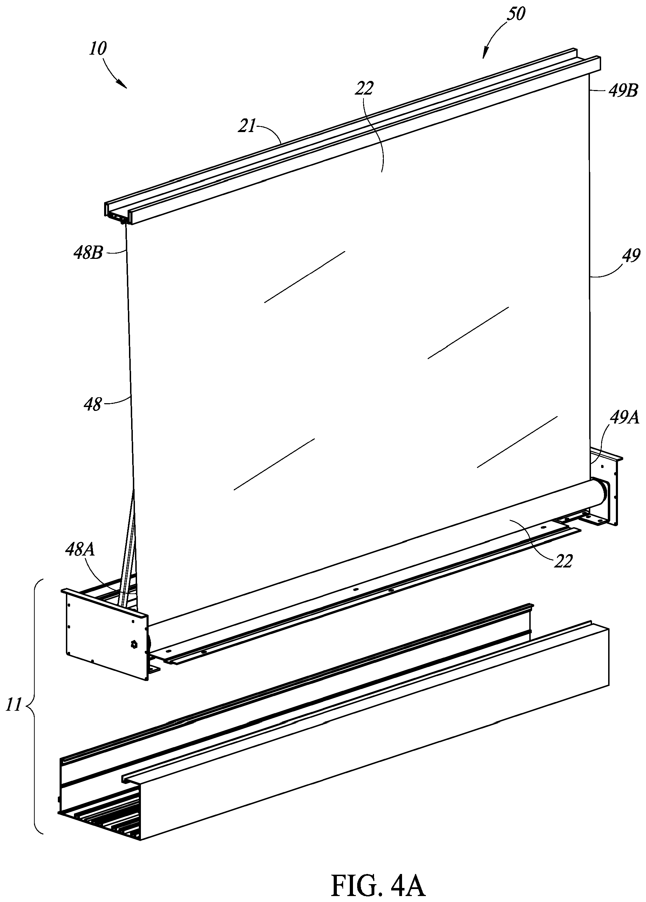

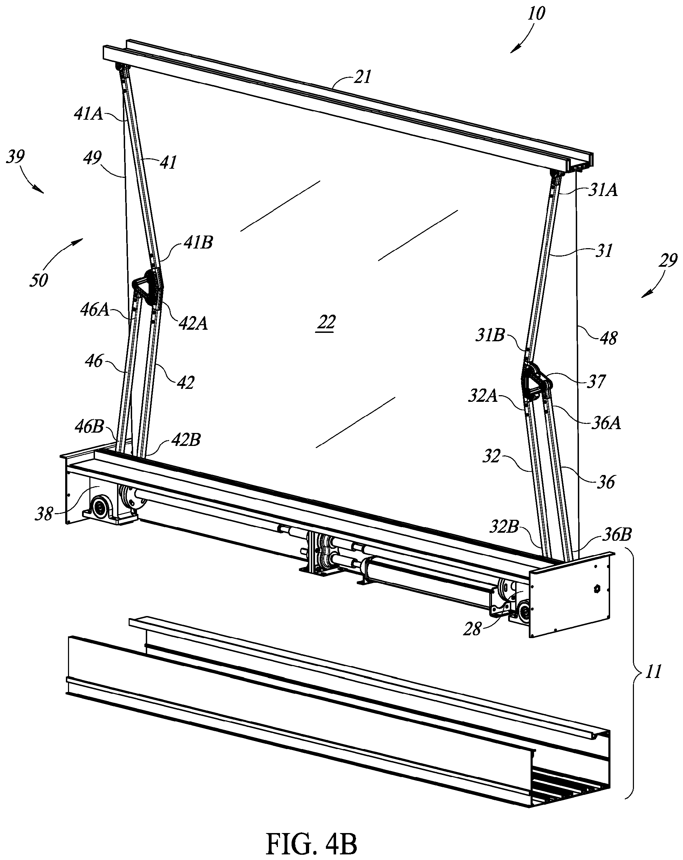

Figure 1 to Figure 6 show a motorized barrier device 10 having a generally parallelopiped housing 11 with a front panel 12, a rear panel 13, a top panel 14, a bottom panel 16, a left end panel 17 and a right end panel 18. The top panel 14 is formed with an uppermost lengthwise slot 19 extending therealong. The housing 11 has the following external dimensions: length L, width W and height H. Length L can be a wide range of lengths from, say, 1 m to 3 m. Width W can be in a wide range of widths, say, 20 cm to 40 cm. Height H can be in a wide range of heights, say, 15 cm to 35 cm. The motorized barrier device 10 can be powered by the mains, a rechargeable battery, and the like.

The barrier device 10 includes a horizontal rigid beam 21 having a left beam end 21A and a right beam end 21B, the horizontal rigid beam 21 having a storage position and a barrier position raised with respect to the storage position. The horizontal rigid beam 21 is preferably flush with the top panel 14 in its storage position. The barrier device 10 includes a spring biased self-winding flexible barrier fitment 22 installed in the housing 11. The flexible barrier fitment 22 includes a leading flexible barrier fitment edge 22A attached to the horizontal rigid beam 21. The flexible barrier fitment 22 can be constituted by sheet material, mesh material, and the like. The flexible barrier fitment 22 can be constituted by cloth, plastic, metal, and the like.

The barrier device 10 includes a horizontal axle 23 having a left axle end 23A and a right axle end 23B, and co-extensive with the horizontal rigid beam 21. The barrier device 10 includes an electric motor 24 for clockwise and counterclockwise rotating the horizontal axle 23 via a gear transmission 26. The electric motor 24 is preferably a commercially available low profile tubular motor. The electric motor 24 preferably includes an automatic switch-off feature for automatically switching itself off when the motorized barrier device 10 is in its storage position and its barrier position.

The barrier device 10 includes a left worm gear 28 at the left axle end 23A for driving a left folding arm 29 between a folded position and an extended position. The left folding arm 29 includes a left upper arm 31 and a left lower arm 32. The left upper arm 31 includes a leading left upper arm end 31A pivotally connected to the horizontal rigid beam 21 and a trailing left upper arm end 31B with a left upper arm gear wheel 33. The left lower arm 32 includes a leading left lower arm end 32A with a left lower arm gear wheel 34 engaging the left upper arm gear wheel 33 and a trailing left lower arm end 32B driven by the left worm gear 28. The barrier device 10 further includes a left support arm 36 including a leading left support arm end 36A having a pivotally connected bracket 37 pivotally connected to the trailing left upper arm end 31B and the leading left lower arm end 32A and a trailing left support arm end 36B rotatably connected to the housing 11 such that the left support arm 36 moves in tandem with the left folding arm 29.

The barrier device 10 includes a right worm gear 38 at the right axle end 23B for driving a right folding arm 39 between a folded position and an extended position. The right folding arm 39 includes a right upper arm 41 and a right lower arm 42. The right upper arm 41 includes a leading right upper arm end 41A pivotally connected to the horizontal rigid beam 21 and a trailing right upper arm end 41B with a right upper arm gear wheel 43. The right lower arm 42 includes a leading right lower arm end 42A with a right lower arm gear wheel 44 engaging the right upper arm gear wheel 43 and a trailing right lower arm end 42B driven by the right worm gear 38. The barrier device 10 further includes a right support arm 46 including a leading right support arm end 46A having a pivotally connected bracket 47 pivotally connected to the trailing right upper arm end 41B and the leading right lower arm end 42A whereby the right support arm 46 moves in tandem with the right folding arm 39.

The flexible barrier fitment 22 preferably includes a spring biased self-winding left cable 48 on the barrier device 10's left side and a spring biased self-winding right cable 49 on the barrier device 10's right side. The flexible barrier fitment 22's left and right hems preferably have the left cable 48 and the right cable 49 stitched therein, respectively. The left cable 48 has a cable end 48A installed in the housing 11 and an opposite cable end 48B attached to either the horizontal rigid beam 21 or the leading left upper arm end 31A. The right cable 49 has a cable end 49A installed in the housing 11 and an opposite cable end 49B attached to either the horizontal rigid beam 21 or the leading right upper arm end 41A.

The flexible barrier fitment 22, the left folding arm 29, and the right folding arm 39 are dimensioned such that the flexible barrier fitment 22 restrains full extension of the left folding arm 29 and the right folding arm 39. In other words, raising the horizontal rigid beam 21 until the flexible barrier fitment 22 is stretched tautly heightwise restrains further raising the horizontal rigid beam 21 such that the flexible barrier fitment 22 determines the horizontal rigid beam 21's barrier position. The housing 11, the horizontal rigid beam 21 and the left folding arm 29 and the right folding arm 39 in their substantially upright extended positions constitute a rigid frame 50 for supporting the flexible barrier fitment 22. Tautly stretching the left cable 48 and the right cable 49 heightwise in turn leads to tautly stretching the barrier material therebetween. The left worm gear 28 and the right worm gear 38 are effectively self-locking in the sense that the barrier device 10 remains in its barrier position without operation of the electric motor 24.

The barrier device 10 can be operated by a manual UP/DOWN switch 51, an UP/DOWN remote control 52, a smartphone app 53, and the like. The barrier device 10 can issue alerts in the case of a malfunction, and the like. The barrier device 10 can be operated by a controller 54 having a user interface 56. The barrier device 10 can be automatically operated depending on its deployment. For example, a barrier device 10 can be automatically operated in accordance with a predetermined timing schedule. Alternatively, a barrier device 10 can be automatically operated in accordance with ambient light conditions, for example, in its storage position during daytime and barrier position during nighttime, or vice versa. Still again, a barrier device 10 can be automatically operated by an access management system 57 employing commercially available data recognition capabilities including *inter alia* bar card readers, biometric recognition, vehicle registration recognition, and the like.

Operation of the barrier device 10 between its storage position and its barrier position is as follows:
In its storage position, the horizontal rigid beam 21 is in its storage position flush with the top panel 14, the flexible barrier fitment 22 is fully self-wound, and the left folding arm 29 and the right folding arm 39 are inwardly folded towards one another. The left bracket 37 enables the left upper arm 31 to overlie the left lower arm 32 and the right bracket 47 enables the right upper arm 41 to overlie the right lower arm 42 for facilitating reducing the barrier device 10's height H. The left folding arm 29 and the right folding arm 39 are preferably generally horizontal in the barrier device 10's storage position.

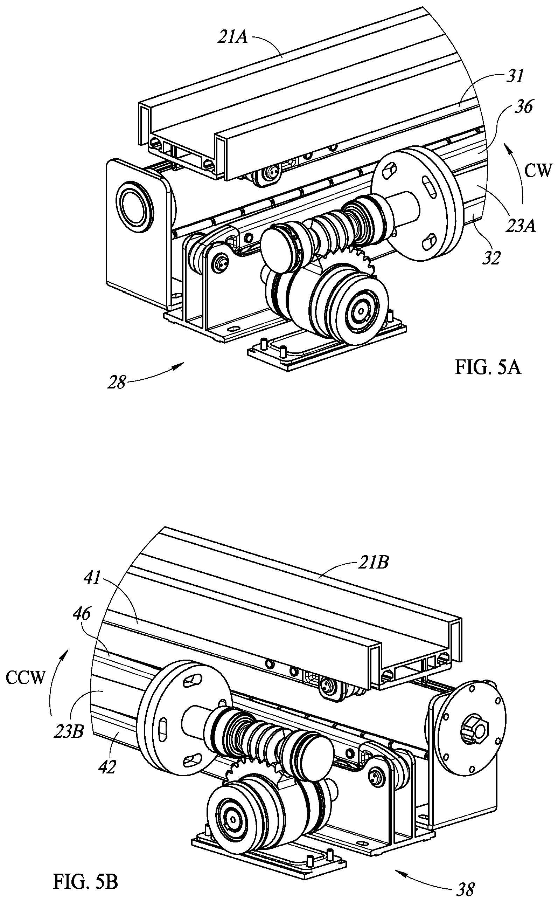

As shown in Figure 5A, on viewing the left worm gear 28 from the gear transmission 26, clockwise rotation of the horizontal axle 23 causes the left worm gear 28 to upwardly rotate the left lower arm 32 a near quarter turn which in turn upwardly rotates the left upper arm 31 relative to the left lower arm 32 to extend the left folding arm 29. And as shown in Figure 5B, the right worm gear 38 simultaneously upwardly rotates the right lower arm 42 a quarter turn which in turn upwardly rotates the right upper arm 41 relative to the right lower arm 42 to extend the right folding arm 39. Accordingly, the horizontal rigid beam 21 is raised from its storage position to its barrier position until restrained by the full extension of the flexible barrier fitment 22 to form the rigid frame 50.

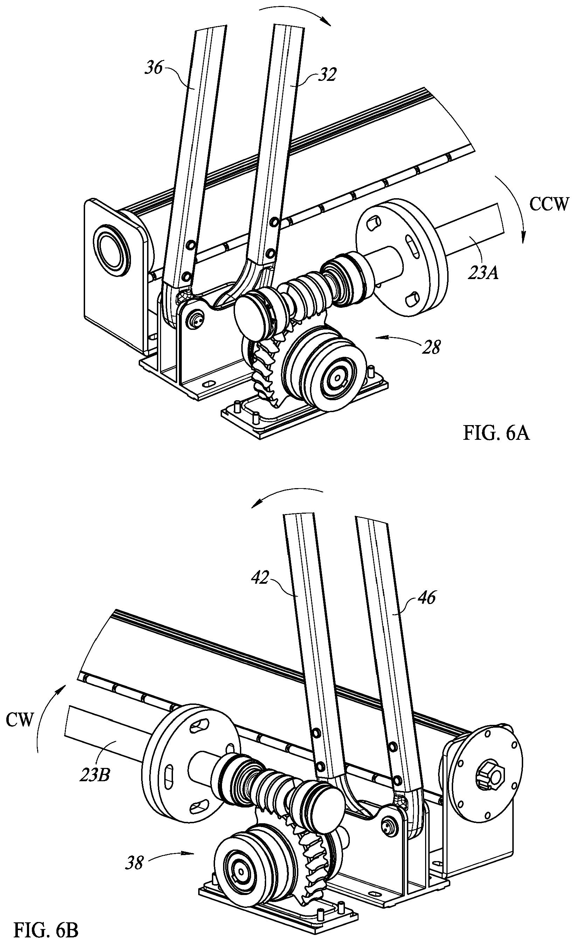

As shown in Figure 6A, on viewing the left worm gear 28 from the gear transmission 26, counterclockwise rotation of the horizontal axle 23 causes the left worm gear 28 to downwardly rotate the left lower arm 32 a near quarter turn which in turn downwardly rotates the left upper arm 31 relative to the left lower arm 32 such that the left upper arm 31 overlies the left lower arm 32. And as shown in Figure 6B, the right worm gear 38 simultaneously downwardly rotates the right lower arm 42 a near quarter turn which in turn downwardly rotates the right upper arm 41 relative to the right lower arm 42 such that the right upper arm 41 overlies the right lower arm 42. Accordingly, the rigid frame 50 collapses controllably enabling the flexible barrier fitment 22 to self-rewind in preparation for subsequent raising.

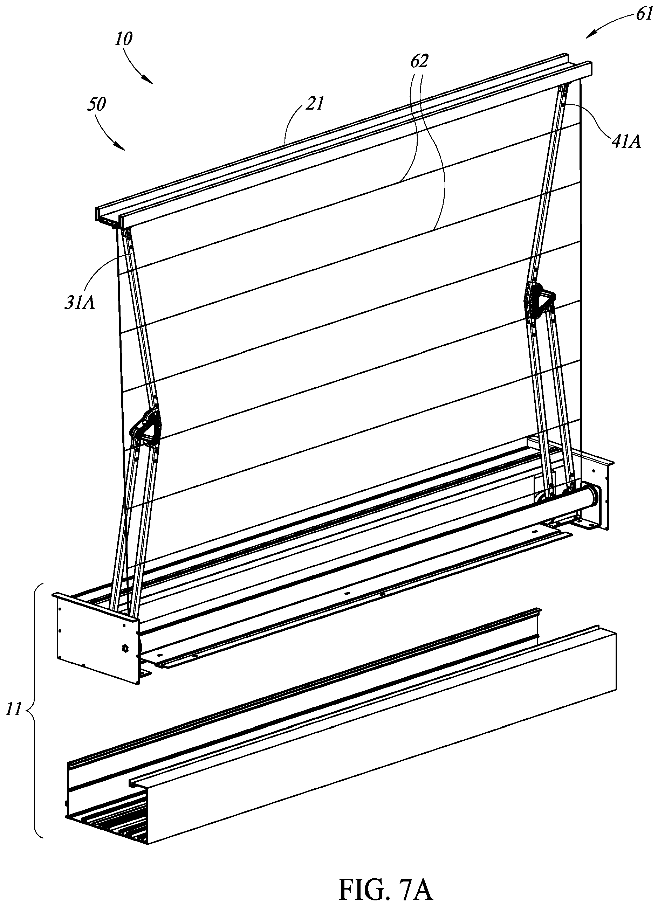

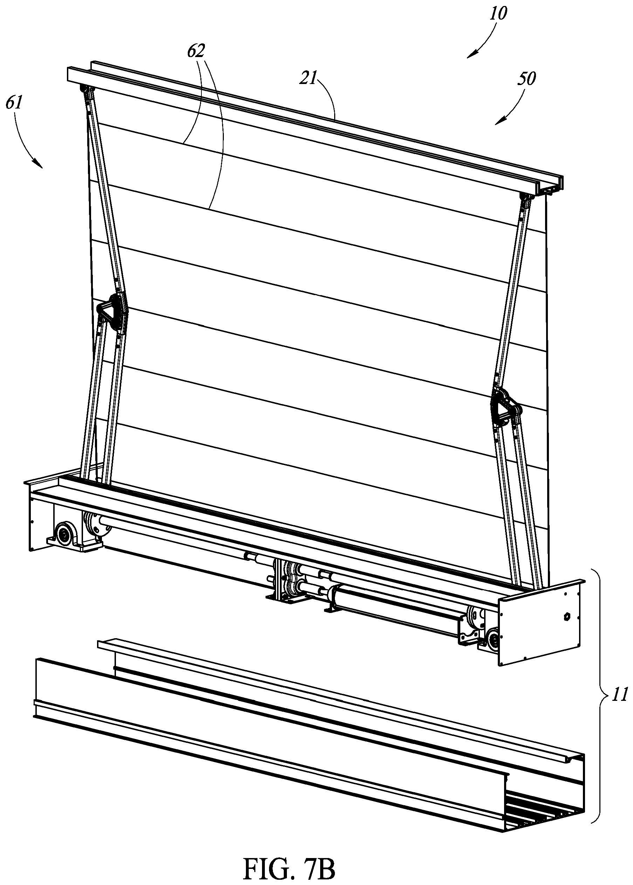

Figure 7A and Figure 7B show a barrier device 10 including a flexible barrier fitment 61 constituted by horizontal wires 62 extending between the left cable 48 and the right cable 49. Tautly stretching the left cable 48 and the right cable 49 heightwise in turn leads to tautly stretching the horizontal wires 62 therebetween.

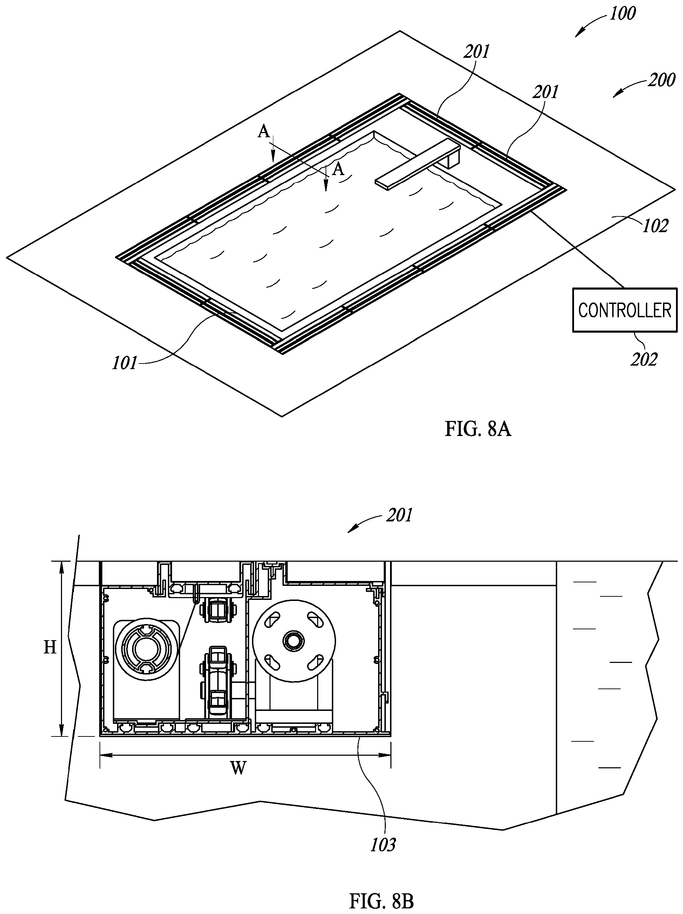

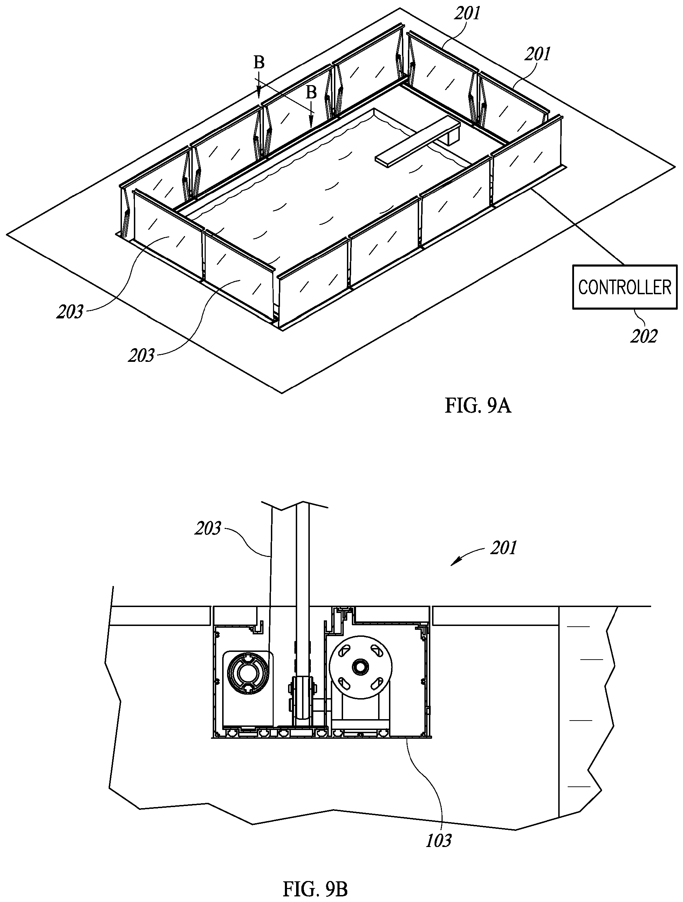

Figure 8A to Figure 9B show an installation 100 including a swimming pool 101 constituting a protected area. The installation 100 includes a pool deck 102 constituting a border surrounding the swimming pool 101. The installation 100 includes a trench 103 formed in the pool deck 102. The trench 103 preferably has the same height and width as the barrier device 10 such that it can snugly receive same. Figure 8A and Figure 9A show an access management system 200 for managing access to the swimming pool 101. The access management system 200 includes 12 barrier devices 201 surrounding the swimming pool 101 and a controller 202 for controlling their operation. The barrier devices 201 are deployed in the trench 103 such that they are flush fit with the pool deck 102 in their storage position (see Figure 8A and Figure 8B). Adjacent barrier devices 201 are placed side-by-side sufficiently closely to preclude passage therebetween. The barrier devices 201 preferably include flexible barrier fitments 203 enabling the swimming pool 101 to be seen therethrough in the disabling access position (see Figure 9A and Figure 9B).

While the invention has been described with respect to a limited number of embodiments, it will be appreciated that many variations, modifications, and other applications of the invention can be made within the scope of the appended claims.

## Claims

1. A motorized barrier device (10) comprising:
a) a housing (11);
b) a horizontal axle (23) mounted in said housing, said horizontal axle having a left axle end (23A) and a right axle end (23B);
c) a horizontal rigid beam (21) having a left beam end (21A) and a right beam end (21B), said horizontal rigid beam having a storage position and a barrier position raised with respect to said storage position;
d) a left folding arm (29) including:
- a left upper arm (31) having a leading left upper arm end pivotally connected to said horizontal rigid beam and a trailing left upper arm end with a left upper arm gear wheel (33),
- a left lower arm (32) having a leading left lower arm end with a left lower arm gear wheel (34) engaging said left upper arm gear wheel and a trailing left lower arm end,
- a left support arm (36) including a leading left support arm end having a pivotally connected bracket pivotally connected to said trailing left upper arm end and said leading left lower arm end, and a trailing left support arm end pivotally connected to said housing,
said left folding arm being rotatable between a substantially horizontal folded position overlying said horizontal axle and a substantially upright extended position;
e) a right folding arm (39) including:
- a right upper arm (41) having a leading right upper arm end pivotally connected to said horizontal rigid beam and a trailing right upper arm end with a right upper arm gear wheel (43),
- a right lower arm (42) having a leading right lower arm end with a right lower arm gear wheel (44) engaging said right upper arm gear wheel and a trailing right lower arm end,
- a right support arm (46) including a leading right support arm end having a pivotally connected bracket pivotally connected to said trailing right upper arm end and said leading right lower arm end, and a trailing right support arm end pivotally connected to said housing,
said right folding arm being rotatable between a substantially horizontal folded position overlying said horizontal axle and a substantially upright extended position,
said right folding arm and said left folding arm being folded toward one another in their said substantially horizontal folded positions and said right folding arm and said left folding arm being substantially parallel in their said substantially upright extended positions;
f) a left worm gear (28) at said left axle end for driving said left folding arm between said folded position and said extended position;
g) a right worm gear (38) at said right axle end for driving said right folding arm between said folded position and said extended position;
h) a motor (24) for rotating said horizontal axle in one direction for driving said left worm gear and said right worm gear for raising said horizontal rigid beam from said storage position to said barrier position whereupon said housing, said left folding arm, said right folding arm and said horizontal rigid beam constitute a rigid frame, and
said motor rotating said horizontal axle in an opposite direction for driving said left worm gear and said right worm gear for lowering said horizontal rigid beam from said barrier position to said storage position; and
i) a self-winding flexible barrier fitment (22) initially stored in said housing in said storage position and raised to form a barrier supported on said rigid frame in said barrier position,
said flexible barrier fitment enabling raising said horizontal rigid beam from said storage position until being stretched tautly heightwise thereby determining said horizontal rigid beam's barrier position, and
said flexible barrier fitment self-winding on lowering said horizontal rigid beam from said barrier position to said storage position.

2. The device according to claim 1 wherein said flexible barrier fitment includes a self-winding left cable (48) on a left side of the barrier device and a self-winding right cable (49) on a right side of the barrier device.

3. An access management system for managing access to a protected area, the access management system comprising:
(a) at least one motorized barrier device according to claim 1 or 2; and
(b) a controller for controlling said at least one motorized barrier device.

4. An installation (100) for protecting a protected area, the installation comprising at least one motorized barrier device according to claim 1 or 2 for managing access to the protected area.

5. The installation according to claim 4 wherein the installation includes a border adjacent the protected area and a trench in the border for deployment of said at least one motorized barrier device therein wherein said horizontal rigid beam in said storage position is flush with the border.

6. The installation according to claim 5 wherein the trench surrounds the protected area and said at least one motorized device is deployed in the trench to surround the protected area.

7. The installation according to any one of claims 4 to 6 wherein said at least one motorized barrier device enables viewing the protected area therethrough.

8. The installation according to any one of claims 4 to 7 wherein the protected area is a swimming pool (101).

9. The installation according to any one of claims 4 to 8 and further comprising an access management system (200) for controlling said at least one motorized barrier device.

10. A method for managing access to a protected area, the method comprising the steps of:
(a) providing at least one motorized barrier device according to claim 1 or 2; and
(b) controlling the at least one motorized barrier device.

11. The method according to claim 10 wherein an installation includes a border adjacent the protected area and a trench in the border for deployment of said at least one motorized barrier device therein wherein its horizontal rigid beam in its storage position is flush with the border.

12. The method according to claim 11 wherein the trench surrounds the protected area and the at least one motorized device is deployed in the trench to surround the protected area.

13. The method according to any one of claims 10 to 12 wherein the at least one motorized barrier device enables viewing the protected area therethrough.

14. The method according to any one of claims 10 to 13 wherein the protected area is a swimming pool.

## Patentansprüche

1. Motorisierte Barrierevorrichtung (10), umfassend:
a) ein Gehäuse (11);
b) eine horizontale Welle (23), die in dem Gehäuse montiert ist, wobei die horizontale Welle ein linkes Wellenende (23A) und ein rechtes Wellenende (23B) aufweist;
c) einen horizontalen starren Träger (21) mit einem linken Trägerende (21A) und einem rechten Trägerende (21B), wobei der horizontale starre Träger eine Verstauposition und eine Barriereposition aufweist, die in Bezug auf die Verstauposition angehoben ist;
d) einen linken Klapparm (29), umfassend:
- einen linken oberen Arm (31) mit einem vorderen linken oberen Armende, das schwenkbar mit dem horizontalen starren Träger verbunden ist, und einem hinteren linken oberen Armende mit einem linken oberen Armzahnrad (33),
- einen linken unteren Arm (32) mit einem vorderen linken unteren Armende mit einem linken unteren Armzahnrad (34), das mit dem linken oberen Armzahnrad koppelt, und einem hinteren linken unteren Armende,
- einen linken Stützarm (36) mit einem vorderen linken Stützarmende mit einer schwenkbar verbundenen Halterung, die schwenkbar mit dem hinteren linken oberen Armende und dem vorderen linken unteren Armende verbunden ist, und einem hinteren linken Stützarmende, das schwenkbar mit dem Gehäuse verbunden ist,
wobei der linke Klapparm zwischen einer im Wesentlichen horizontalen Klappposition, die über der horizontalen Welle liegt, und einer im Wesentlichen aufrechten ausgefahrenen Position drehbar ist;
e) einen rechten Klapparm (39), umfassend:
- einen rechten oberen Arm (41) mit einem vorderen rechten oberen Armende, das schwenkbar mit dem horizontalen starren Träger verbunden ist, und einem hinteren rechten oberen Armende mit einem rechten oberen Armzahnrad (43),
- einen rechten unteren Arm (42) mit einem vorderen rechten unteren Armende mit einem rechten unteren Armzahnrad (44), das mit dem rechten oberen Armzahnrad koppelt, und einem hinteren rechten unteren Armende,
- einen rechten Stützarm (46) mit einem vorderen rechten Stützarmende mit einer schwenkbar verbundenen Halterung, die schwenkbar mit dem hinteren rechten oberen Armende und dem vorderen rechten unteren Armende verbunden ist, und einem hinteren rechten Stützarmende, das schwenkbar mit dem Gehäuse verbunden ist,
wobei der rechte Klapparm zwischen einer im Wesentlichen horizontalen Klappposition, die über der horizontalen Welle liegt, und einer im Wesentlichen aufrechten ausgefahrenen Position drehbar ist,
wobei der rechte Klapparm und der linke Klapparm in ihren im Wesentlichen horizontalen Klapppositionen aufeinander zu geklappt sind und der rechte Klapparm und der linke Klapparm in ihren im Wesentlichen aufrechten ausgefahrenen Positionen im Wesentlichen parallel sind;
f) ein linkes Schneckenrad (28) an dem linken Wellenende zum Antreiben des linken Klapparms zwischen der Klappposition und der ausgefahrenen Position;
g) ein rechtes Schneckenrad (38) an dem rechten Wellenende zum Antreiben des rechten Klapparms zwischen der Klappposition und der ausgefahrenen Position;
h) einen Motor (24) zum Drehen der horizontalen Welle in einer Richtung zum Antreiben des linken Schneckenrads und des rechten Schneckenrads zum Anheben des horizontalen starren Trägers aus der Verstauposition in die Barriereposition, woraufhin das Gehäuse, der linke Klapparm, der rechte Klapparm und der horizontale starre Träger einen starren Rahmen bilden, und
wobei der Motor die horizontale Welle in einer entgegengesetzten Richtung zum Antreiben des linken Schneckenrads und des rechten Schneckenrads zum Absenken des horizontalen starren Trägers aus der Barriereposition in die Verstauposition dreht; und
i) einen selbstwickelnden flexiblen Barriereeinsatz (22), der anfänglich in dem Gehäuse in der Verstauposition verstaut und angehoben wird, um eine Barriere zu bilden, die auf dem starren Rahmen in der Barriereposition gestützt wird,
wobei der flexible Barriereeinsatz das Anheben des horizontalen starren Trägers aus der Verstauposition ermöglicht, bis er straff in der Höhe gestreckt wird, wodurch die Barriereposition des horizontalen starren Trägers bestimmt wird, und
wobei sich der flexible Barriereeinsatz beim Absenken des horizontalen starren Trägers aus der Barriereposition in die Verstauposition selbst einwickelt.

2. Vorrichtung nach Anspruch 1, wobei der flexible Barriereeinsatz ein selbstwickelndes linkes Kabel (48) auf einer linken Seite der Barrierevorrichtung und ein selbstwickelndes rechtes Kabel (49) auf einer rechten Seite der Barrierevorrichtung umfasst.

3. Zugangsverwaltungssystem zum Verwalten des Zugangs zu einem geschützten Bereich, wobei das Zugangsverwaltungssystem umfasst:
(a) mindestens eine motorisierte Barrierevorrichtung nach Anspruch 1 oder 2; und
(b) eine Steuerung zum Steuern der mindestens einen motorisierten Barrierevorrichtung.

4. Anlage (100) zum Schützen eines geschützten Bereichs, wobei die Anlage mindestens eine motorisierte Barrierevorrichtung nach Anspruch 1 oder 2 zum Verwalten des Zugangs zu dem geschützten Bereich umfasst.

5. Anlage nach Anspruch 4, wobei die Anlage eine Grenze neben dem geschützten Bereich und einen Graben in der Grenze zum Einsetzen der mindestens einen motorisierten Barrierevorrichtung darin umfasst, wobei der horizontale starre Träger in der Verstauposition bündig mit der Grenze ist.

6. Anlage nach Anspruch 5, wobei der Graben den geschützten Bereich umgibt und die mindestens eine motorisierte Vorrichtung in dem Graben eingesetzt wird, um den geschützten Bereich zu umgeben.

7. Anlage nach einem der Ansprüche 4 bis 6, wobei die mindestens eine motorisierte Barrierevorrichtung das Betrachten des geschützten Bereichs durch diese ermöglicht.

8. Anlage nach einem der Ansprüche 4 bis 7, wobei der geschützte Bereich ein Schwimmbecken (101) ist.

9. Anlage nach einem der Ansprüche 4 bis 8 und ferner umfassend ein Zugangsverwaltungssystem (200) zum Steuern der mindestens einen motorisierten Barrierevorrichtung.

10. Verfahren zum Verwalten des Zugangs zu einem geschützten Bereich, wobei das Verfahren die folgenden Schritte umfasst:
(a) Bereitstellen mindestens einer motorisierten Barrierevorrichtung nach Anspruch 1 oder 2; und
(b) Steuern der mindestens einen motorisierten Barrierevorrichtung.

11. Verfahren nach Anspruch 10, wobei eine Anlage eine Grenze neben dem geschützten Bereich und einen Graben in der Grenze zum Einsetzen der mindestens einen motorisierten Barrierevorrichtung darin umfasst, wobei ihr horizontaler starrer Träger in seiner Verstauposition bündig mit der Grenze ist.

12. Verfahren nach Anspruch 11, wobei der Graben den geschützten Bereich umgibt und die mindestens eine motorisierte Vorrichtung in dem Graben eingesetzt wird, um den geschützten Bereich zu umgeben.

13. Verfahren nach einem der Ansprüche 10 bis 12, wobei die mindestens eine motorisierte Barrierevorrichtung das Betrachten des geschützten Bereichs durch diese ermöglicht.

14. Verfahren nach einem der Ansprüche 10 bis 13, wobei der geschützte Bereich ein Schwimmbecken ist.

## Revendications

1. Dispositif de barrière motorisé (10) comprenant :
a) un boîtier (11) ;
b) un essieu horizontal (23) monté dans ledit boîtier, ledit essieu horizontal ayant une extrémité d'essieu gauche (23A) et une extrémité d'essieu droite (23B) ;
c) une poutre rigide horizontale (21) ayant une extrémité de poutre gauche (21A) et une extrémité de poutre droite (21B), ladite poutre rigide horizontale ayant une position de stockage et une position de barrière élevée par rapport à ladite position de stockage ;
d) un bras pliant gauche (29) comprenant :
- un bras supérieur gauche (31) ayant une extrémité de bras supérieur gauche avant reliée de manière pivotante à ladite poutre rigide horizontale et une extrémité de bras supérieur gauche arrière avec une roue dentée de bras supérieur gauche (33),
- un bras inférieur gauche (32) ayant une extrémité de bras inférieur gauche avant avec une roue dentée de bras inférieur gauche (34) en prise avec ladite roue dentée de bras supérieur gauche et une extrémité de bras inférieur gauche arrière,
- un bras de support gauche (36) comprenant une extrémité de bras de support gauche avant ayant une fixation support reliée de manière pivotante à ladite extrémité de bras supérieur gauche arrière et à ladite extrémité de bras inférieur gauche avant, et une extrémité de bras de support gauche arrière reliée de manière pivotante audit boîtier,
ledit bras pliant gauche pouvant tourner entre une position pliée sensiblement horizontale recouvrant ledit essieu horizontal et une position étendue sensiblement verticale ;
e) un bras pliant droit (39) comprenant :
- un bras supérieur droit (41) ayant une extrémité de bras supérieur droit avant reliée de manière pivotante à ladite poutre rigide horizontale et une extrémité de bras supérieur droit arrière avec une roue dentée de bras supérieur droit (43),
- un bras inférieur droit (42) ayant une extrémité de bras inférieur droit avant avec une roue dentée de bras inférieur droit (44) en prise avec ladite roue dentée de bras supérieur droit et une extrémité de bras inférieur droit arrière,
- un bras de support droit (46) comprenant une extrémité de bras de support droit avant ayant une fixation support reliée de manière pivotante à ladite extrémité de bras supérieur droit arrière et à ladite extrémité de bras inférieur droit avant, et une extrémité de bras de support droit arrière reliée de manière pivotante audit boîtier,
ledit bras pliant droit pouvant tourner entre une position pliée sensiblement horizontale recouvrant ledit essieu horizontal et une position étendue sensiblement verticale,
ledit bras pliant droit et ledit bras pliant gauche étant pliés l'un vers l'autre dans leurs dites positions pliées sensiblement horizontales et ledit bras pliant droit et ledit bras pliant gauche étant sensiblement parallèles dans leurs dites positions étendues sensiblement verticales ;
f) un engrenage à vis sans fin gauche (28) au niveau de ladite extrémité d'essieu gauche pour entraîner ledit bras pliant gauche entre ladite position pliée et ladite position étendue ;
g) un engrenage à vis sans fin droit (38) au niveau de ladite extrémité d'essieu droit pour entraîner ledit bras pliant droit entre ladite position pliée et ladite position étendue ;
h) un moteur (24) pour faire tourner ledit essieu horizontal dans une direction pour entraîner ledit engrenage à vis sans fin gauche et ledit engrenage à vis sans fin droit pour élever ladite poutre rigide horizontale de ladite position de stockage à ladite position de barrière, après quoi ledit boîtier, ledit bras pliant gauche, ledit bras pliant droit et ladite poutre rigide horizontale constituent un cadre rigide, et
ledit moteur faisant tourner ledit essieu horizontal dans une direction opposée pour entraîner ledit engrenage à vis sans fin gauche et ledit engrenage à vis sans fin droit pour abaisser ladite poutre rigide horizontale de ladite position de barrière à ladite position de stockage ; et
i) un accessoire de barrière flexible auto-enroulable (22) initialement stocké dans ledit boîtier dans ladite position de stockage et élevé pour former une barrière supportée sur ledit cadre rigide dans ladite position de barrière,
dans lequel ledit accessoire de barrière flexible permet d'élever ladite poutre rigide horizontale depuis ladite position de stockage jusqu'à ce qu'elle soit tendue fermement en hauteur, déterminant ainsi la position de barrière de ladite poutre rigide horizontale, et
dans lequel ledit accessoire de barrière flexible s'auto-enroule lors de l'abaissement de ladite poutre rigide horizontale de ladite position de barrière à ladite position de stockage.

2. Dispositif selon la revendication 1, dans lequel ledit accessoire de barrière flexible comprend un câble gauche auto-enroulable (48) sur un côté gauche du dispositif de barrière et un câble droit auto-enroulable (49) sur un côté droit du dispositif de barrière.

3. Système de gestion d'accès pour gérer l'accès à une zone protégée, le système de gestion d'accès comprenant :
(a) au moins un dispositif de barrière motorisé selon la revendication 1 ou 2 ; et
(b) un dispositif de commande pour commander ledit au moins un dispositif de barrière motorisé.

4. Installation (100) pour protéger une zone protégée, l'installation comprenant au moins un dispositif de barrière motorisé selon la revendication 1 ou 2 pour gérer l'accès à la zone protégée.

5. Installation selon la revendication 4, dans laquelle l'installation comprend une bordure adjacente à la zone protégée et une tranchée dans la bordure pour le déploiement dudit au moins un dispositif de barrière motorisé dans celle-ci, dans laquelle ladite poutre rigide horizontale dans ladite position de stockage est de niveau avec la bordure.

6. Installation selon la revendication 5, dans laquelle la tranchée entoure la zone protégée et ledit au moins un dispositif motorisé est déployé dans la tranchée pour entourer la zone protégée.

7. Installation selon l'une quelconque des revendications 4 à 6, dans laquelle ledit au moins un dispositif de barrière motorisé permet de visualiser la zone protégée à travers celui-ci.

8. Installation selon l'une quelconque des revendications 4 à 7, dans laquelle la zone protégée est une piscine (101).

9. Installation selon l'une quelconque des revendications 4 à 8 et comprenant en outre un système de gestion d'accès (200) pour commander ledit au moins un dispositif de barrière motorisé.

10. Procédé pour gérer l'accès à une zone protégée, le procédé comprenant les étapes suivantes :
(a) fournir au moins un dispositif de barrière motorisé selon la revendication 1 ou 2 ; et
(b) commander l'au moins un dispositif de barrière motorisé.

11. Procédé selon la revendication 10, dans lequel une installation comprend une bordure adjacente à la zone protégée et une tranchée dans la bordure pour le déploiement dudit au moins un dispositif de barrière motorisé dans celle-ci, dans lequel sa poutre rigide horizontale dans sa position de stockage est de niveau avec la bordure.

12. Procédé selon la revendication 11, dans lequel la tranchée entoure la zone protégée et l'au moins un dispositif motorisé est déployé dans la tranchée pour entourer la zone protégée.

13. Procédé selon l'une quelconque des revendications 10 à 12, dans lequel l'au moins un dispositif de barrière motorisé permet de visualiser la zone protégée à travers celui-ci.

14. Procédé selon l'une quelconque des revendications 10 à 13, dans lequel la zone protégée est une piscine.
